# EUROPÄISCHE PATENTSCHRIFT

(11) **EP 2 331 375 B1**
(45) Veröffentlichungstag und Bekanntmachung des Hinweises auf die Patenterteilung: **06.06.2012**
(21) Anmeldenummer: 09778586.9
(22) Anmeldetag: 17.09.2009
(51) Int. Cl.: B60T 13/68, B60T 17/02, B60T 17/18, B60T 13/36

(54) **VERFAHREN ZUM BETREIBEN EINES FESTSTELLBREMSMODULS IM DEFEKTFALL UND ZUM AUSFÜHREN DES VERFAHRENS GEEIGNETES FESTSTELLBREMSMODUL**
METHOD FOR OPERATING A PARKING BRAKE MODULE IN THE EVENT OF DEFECTS AND PARKING BRAKE MODULE SUITABLE FOR PERFORMING THE METHOD
PROCÉDÉ POUR FAIRE FONCTIONNER UN MODULE DE FREIN DE STATIONNEMENT EN CAS DE DÉFAILLANCE ET MODULE DE FREIN DE STATIONNEMENT CONVENANT À L'EXÉCUTION DE CE PROCÉDÉ

(30) Priorität: 17.09.2008 DE 102008047631
(43) Veröffentlichungstag der Anmeldung: 15.06.2011
(73) Patentinhaber: Knorr-Bremse Systeme für Nutzfahrzeuge GmbH, 80809 München (DE)
(72) Erfinder: KAUPERT, Oliver, 80995 München (DE)
(74) Vertreter: Schönmann, Kurt
(86) Internationale Anmeldenummer: PCT/EP2009/006731
(87) Internationale Veröffentlichungsnummer: WO 2010/031562

(56) Entgegenhaltungen:
- EP-A1- 0 308 376
- DE-A1- 19 835 638
- DE-A1-102007 002 020

## Beschreibung

Die Erfindung betrifft ein Verfahren zum Betreiben eines zumindest teilweise in eine Druckluftaufbereitungsanlage integrierten Feststellbremsmoduls im Defektfall, mit einem elektronischen Steuergerät, mehreren Magnetventilen zum Bereitstellen eines Steuerdrucks zur Betätigung der Feststellbremse und einem den Steuerdruck empfangenden Relaisventil zum Be- und Entlüften von zumindest einem Federspeicherbremszylinder.

Die Erfindung betrifft weiterhin ein Feststellbremsmodul, das zumindest teilweise in eine Druckluftaufbereitungsanlage integriert ist, mit einem elektronischen Steuergerät, mehreren Magnetventilen zum Bereitstellen eines Steuerdrucks zur Betätigung der Feststellbremse und einem den Steuerdruck empfangenden Relaisventil zum Be- und Entlüften von zumindest einem Federspeicherbremszylinder.

Aus der DE 198 35 638 A1 ist eine Druckluftaufbereitungsanlage für Kraftfahrzeuge bekannt. In einem Gehäuse sind ein elektromechanischer Druckregler und ein Mehrkreisschutzventil untergebracht mit einem daran angeschlossenen Verbraucherkreis der durch eine zugeordnete Drucksteuereinheit separat verriegelbar ist. Ein zuverlässiger und kostengünstiger Betrieb wird dadurch erreicht, dass zwischen einer der Drucksteuereinheiten und dem Druckreglerausgang ein Druckbegrenzer angeordnet ist der im stromlosen Zustand eine Versorgungsbohrung für die Drucksteuereinheit auf einen vorgegebenen Ausgangsdruck begrenzt.

Ein üblicherweise in ein Fahrzeug ab einer gewissen Gewichtsklasse integriertes Druckluftversorgungssystem mit angeschlossenen Verbrauchern kann dazu ausgelegt sein, für die einzelnen voneinander getrennten Verbraucherkreise unterschiedliche Versorgungsdrücke bereitzustellen. Beispielsweise können eine pneumatische Betriebsbremse und eine Luftfederung des Fahrzeugs mit einem maximalen Versorgungsdruck von derzeit beispielsweise 12,5 bar beaufschlagt werden. Andere Verbraucherkreise, die üblicherweise keinerlei Vorteile aus einem so großen Versorgungsdruck ziehen, können dann hinter einem Druckbegrenzer mit einem geringeren Versorgungsdruck beaufschlagt werden. Eine Auslegung dieser Verbraucherkreise kann dann unter Berücksichtigung des geringeren Versorgungsdruckes erfolgen, wobei insbesondere Fertigungskosten eingespart werden können. Ein Beispiel für einen gegenüber dem Versorgungsdruck eines Betriebsbremskreises mit einem üblicherweise geringeren Versorgungsdruck beaufschlagtem Verbraucherkreis ist ein Feststellbremskreis beziehungsweise ein Feststellbremsmodul des Fahrzeugs, wobei lediglich ein Versorgungsdruck zwischen 9 und 10 bar vorgesehen ist.

Steigt unerwünschterweise im Fall eines Fehlers, zum Beispiel an den Druckbegrenzer oder bei einem Übersprechen des hohen Drucks in den Niederdruckbereich über Formdichtungen, der Druck in dem Feststellbremsmodul bis auf den Abschaltdruck der Druckluftaufbereitungsanlage an, führt dies dauerhaft zu einer Überbelastung der nicht für diese hohen Drücke ausgelegten Bestandteile des Feststellbremsmoduls und der über das Feststellbremsmodul angesteuerten Federspeicherbremszylinder. Es ist bekannt, ein Sicherheitsventil in dem Feststellbremsmodul anzuordnen, das dieses Problem löst. Nachteilig hierbei ist jedoch, insbesondere bei einer zumindest teilweisen Integration des Feststellbremsmoduls in die Druckluftaufbereitungsanlage, dass ein zusätzliches Ventil Bauraum beansprucht und Fertigungskosten verursacht.

Der vorliegenden Erfindung liegt daher die Aufgabe zugrunde, ein separates Sicherheitsventil für das Feststellbremsmodul entbehrlich zu machen, wobei ein Überdruckschutz vor Überdrücken in dem Feststellbremsmodul weiterhin erhalten bleibt.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Das gattungsgemäße Verfahren wird dadurch weitergebildet, dass ein gegenüber einem normalen Druck erhöhter Druck in dem Feststellbremsmodul festgestellt wird, dass eine laufende Druckluftförderung abgebrochen wird, dass ein reduzierter Abschaltdruck der Druckluftaufbereitungsanlage festgesetzt wird und dass das Druckniveau in dem Feststellbremsmodul durch wiederholtes Ansteuern des Relaisventils auf den reduzierten Abschaltdruck gesenkt wird. Durch diese vier Verfahrensschritte wird in sicherer Weise das Druckniveau in dem Feststellbremsmodul unterhalb eines vorgebbaren Schwellenwertes gehalten, auch wenn durch einen Defekt ein unerwünschter Druckanstieg in dem Feststellbremsmodul eingeleitet wird und kein separates Sicherheitsventil als Überdruckschutz in dem Feststellbremsmodul integriert ist. Ein gegenüber einem Normaldruck erhöhter Druck in dem Feststellbremsmodul kann beispielsweise direkt oder indirekt über einen oder mehrere Sensoren festgestellt werden, wobei einzelne Sensoren im Betriebsbremskreis, an einem der Federspeicherbremszylinder, am Eingang oder am Ausgang des Relaisventils der Feststellbremse oder in einem Anhängersteuermodul angeordnet sein können.

Das erfindungsgemäße Verfahren wird vorteilhafterweise dadurch weitergebildet, dass nach dem Abbrechen der Druckluftförderung und vor dem Festsetzen eines niedrigeren Abschaltdruckes eine Regenerationsphase bis zum ursprünglichen Einschaltdruck beziehungsweise bis zum Ende der ursprünglichen Schaltspanne eingeleitet wird, um überschüssiges Druckmittel schneller ablassen zu können. Da ein Druckanstieg in dem Feststellbremsmodul erst eintreten kann, nachdem das Druckniveau zumindest in der Druckluftaufbereitungsanlage bereits ein höheres Niveau erreicht hat, als für das Feststellbremsmodul zulässig ist und eine Absenkung des Druckniveaus in dem Feststellbremsmodul nur bei gleichzeitiger Absenkung des Druckniveaus in der Druckluftaufbereitungsanlage nachhaltig ist, ist ein möglichst schnelles Reduzieren des Druckniveaus in der Druckluftaufbereitungsanlage vorteilhaft.

Besonders bevorzugt ist, dass bei dem Druckabbau durch wiederholtes Ansteuern des Relaisventils eine zyklische Druckänderung in dem zumindest einen von dem Relaisventil angesteuerten Federspeicherbremszylinder induziert wird, wobei der minimale Druck einen Öffnungsdruck des Federspeicherbremszylinders nicht unterschreitet. Durch das zyklische Variieren des Druckniveaus in dem über das Relaisventil angesteuerten zumindest einen Federspeicherbremszylinder kann Druckmittel, das heißt insbesondere Druckluft aus dem Feststellbremsmodul, abgelassen werden. Dabei entspricht das obere Druckniveau in dem Federspeicherbremszylinder dem aktuellen in dem Feststellbremsmodul herrschenden Maximaldruck während das minimale Druckniveau bei ungefähr 6 bar liegt, wobei darauf zu achten ist, dass das minimale Druckniveau so gewählt ist, dass der angesteuerte Federspeicherbremszylinder sicher geöffnet bleibt und sich die Feststellbremse nicht unbeabsichtigt schließt.

Es kann sinnvoll sein, dass nach dem Absenken des Druckniveaus auf den reduzierten Abschaltdruck der ursprünglich höhere Abschaltdruck wieder festgesetzt wird, wenn im Feststellbremsmodul ein dauerhaft normales Druckniveau festgestellt wird. Ist der aufgetretene Fehler reversibel, das heißt ein erneuter unerwünschter Druckanstieg in dem Feststellbremsmodul nicht zu befürchten beziehungsweise es wird über Messungen festgestellt, dass ein erneuter Druckanstieg auf Dauer ausbleibt, kann nach der erfolgreichen Absenkung des Druckniveaus in dem Feststellbremsmodul der ursprünglich eingestellte höhere Abschaltdruck der Druckluftaufbereitungsanlage erneut als Abschaltdruck festgesetzt werden, um die Energieeffizienz der Druckluftaufbereitungsanlage auf hohem Niveau zu halten. Als dauerhaft kann dabei beispielsweise ein einstellbarer Zeitraum gelten, der mehrere Förder- und Regenerationszyklen umfasst.

Alternativ ist auch denkbar, dass die Druckluftaufbereitungsanlage nach dem Absenken des Druckniveaus auf den reduzierten Abschaltdruck mit dem reduzierten Abschaltdruck ohne Einschränkung der Funktionalität weiterbetrieben wird. Auf diese Weise kann ein sicherer Betrieb sämtlicher Fahrzeugeinrichtungen bei einem reduzierten Druckniveau gewährleistet werden, ohne dass einzelne Fahrzeugkomponenten, insbesondere das Feststellbremsmodul, durch eine unerwünscht hohe Druckbelastung geschädigt werden. Das Fahrzeug kann auf diese Weise sicher im Straßenverkehr bewegt werden, bis eine Möglichkeit zur Instandsetzung gegeben ist.

Das gattungsgemäße Feststellbremsmodul wird dadurch weiterentwickelt, dass das elektronische Steuergerät geeignet ist, einen unerwünscht hohen Druck in dem Feststellbremsmodul festzustellen, eine eventuell laufende Druckluftförderung abzubrechen, einen reduzierten Abschaltdruck der Druckluftaufbereitungsanlage festzusetzen und das Druckniveau in dem Feststellbremsmodul auf den reduzierten Abschaltdruck durch wiederholtes Ansteuern des Relaisventils zu senken. Auf diese Weise werden die Vorteile und Besonderheiten des gattungsgemäßen Verfahrens auch im Rahmen einer Vorrichtung umgesetzt.

Diese wird vorteilhafterweise dadurch weiterentwickelt, dass das elektronische Steuergerät geeignet ist, nach dem Abbrechen der Druckluftförderung und vor dem Festsetzen eines niedrigeren Abschaltdruckes eine Regenerationsphase bis zum ursprünglichen Einschaltdruck beziehungsweise bis zum Ende der ursprünglichen Schaltspanne einzuleiten, um überschüssiges Druckmittel schneller ablassen zu können.

Besonders bevorzugt ist dabei, dass das elektronische Steuergerät geeignet ist, bei dem Druckabbau durch wiederholtes Ansteuern des Relaisventils eine zyklische Druckänderung in dem zumindest einen von dem Relaisventil angesteuerten Federspeicherbremszylinder zu induzieren, wobei der minimale Druck einen Öffnungsdruck des Federspeicherbremszylinders nicht unterschreitet.

Es kann sinnvoll sein, dass das elektronische Steuergerät geeignet ist, nach dem Absenken des Druckniveaus auf den reduzierten Abschaltdruck den ursprünglich höheren Abschaltdruck wieder festzusetzen.

Alternativ ist auch denkbar, dass das elektronische Steuergerät geeignet ist, die Druckluftaufbereitungsanlage nach dem Absenken des Druckniveaus auf den reduzierten Abschaltdruck mit dem reduzierten Abschaitdruck ohne Einschränkung der Funktionalität weiterzubetreiben.

Die Erfindung wird nun mit Bezug auf die begleitende Zeichnung anhang einer bevorzugten Ausführungsform beispielhaft erläutert.

Es zeigt:

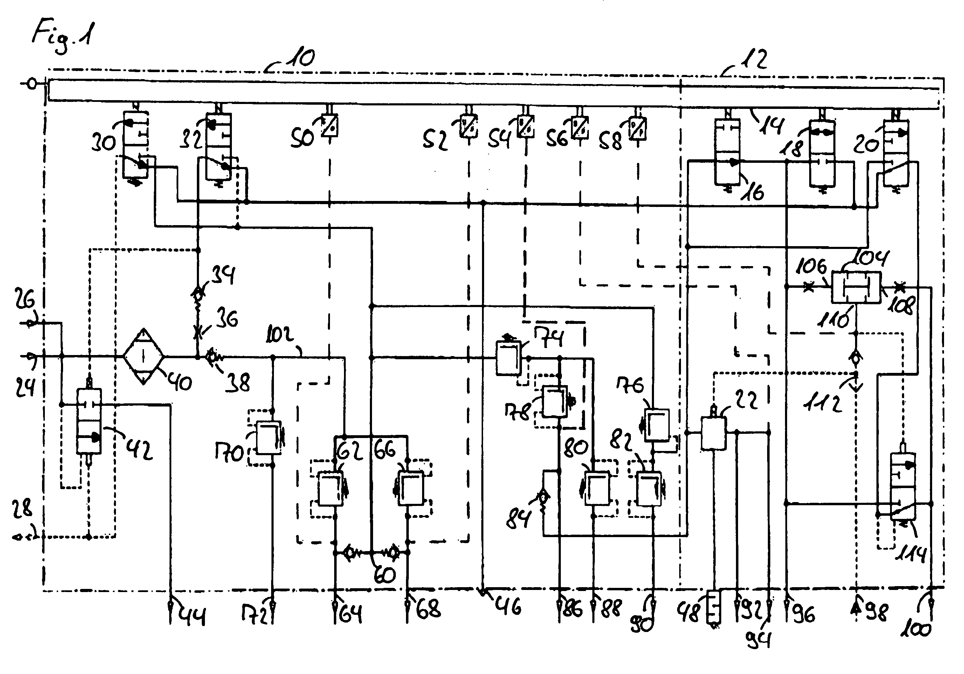

- Figur 1: eine Druckluftaufbereitungsanlage mit integriertem Feststellbremsmodul.

Figur 1 zeigt eine Druckluftaufbereitungsanlage mit integriertem Feststellbremsmodul. Die dargestellte Druckluftaufbereitungsanlage 10 ist, wie durch die strichpunktierte Linie angedeutet, in ein gemeinsames nicht dargestelltes Gehäuse integriert und umfasst auch ein Feststellbremsmodul 12. Im Inneren der Druckluftaufbereitungsanlage 10 angeordnete pneumatische Leitungen sind als durchgezogene Linien dargestellt, pneumatische Steuerleitungen sind als gestrichelte Linien dargestellt und elektrische Leitungen als langgestrichelte Linien eingezeichnet. Die dargestellte Druckluftaufbereitungsanlage 10 umfasst neben einem elektronischen Steuergerät 14, welches auch die Steuerung des Feststellbremsmoduls 12 übernimmt, elektrisch ansteuerbare Magnetventile 30, 32, ein pneumatisch ansteuerbares Ablassventil 42, eine Drossel 36, Rückschlagventile 34 und 38 sowie einen Lufttrockner 40. Darüber hinaus sind Drucksensoren 50, 52, 54, 56 und 58, Druckbegrenzer, 74, 76 und Überströmventile, 62, 66, 70, 78, 80 und 82 dargestellt, wobei die Überströmventile, 62, 66, 70, 78, 80 und 82 die wesentlicher Bestandteil eines nicht näher abgegrenzten Mehrkreisschutzventils sind.

Die Druckluftversorgungseinrichtung kann über einen Drucklufteingang 24 oder einen Fremdbelüftungseingang 26 mit Druckluft versorgt werden. Die dem Druckluftversorgungseinrichtung 10 zugeführte Druckluft wird zunächst in dem Lufttrockner 40 aufbereitet, das heißt insbesondere von Öl- und Schmutzteilchen sowie von Luftfeuchtigkeit gereinigt. Die so aufbereitete Druckluft wird über das Rückschlagventil 38 in eine Förderleitung 102 geführt und von dort mit Hilfe der Bestandteile des Mehrkreisschutzventils auf die einzelnen Verbraucherkreise verteilt. An die Förderleitung 102 sind parallel zueinander hinter Überströmventilen 62, 66 und 70 ein erster Betriebsbremskreis 64, ein zweiter Betriebsbremskreis 68 und eine Luftfederung 72 gekoppelt. Die in dem ersten Betriebsbremskreis 64 beziehungsweise in dem zweiten Betriebsbremskreis 68 erreichten Versorgungsdrücke sind über die Drucksensoren 50 beziehungsweise 52 von dem elektronischen Steuergerät 14 messbar. Diese Messwerte können dann zur Druckregelung innerhalb der Druckluftversorgungseinrichtung 10 herangezogen werden. Stromabwärts der Überströmventile 62 und 66 ist ein Wechselventil 60 angeordnet, über das stromabwärts von Druckbegrenzem 74, 76 und Überströmventilen 78, 80 und 82 ein Anhängerversorgungskreis 86, ein pneumatisches Getriebe 88, ein Zusatzverbraucher 90 und das durch ein Rückschlagventil 84 nochmals gegenüber dem Anhängerversorgungskreis 86 abgesichertes Feststellbremsmodul 12 mit Druckluft nachversorgt werden. Weiterhin kann über das Wechselventil 60 die für einen Regenerationsvorgang des Lufttrockners 40 notwendige Regenerations- und Steuerluft den hierfür zuständigen Magnetventilen 30, 32 zugeführt werden. Wird eine Regenerationsphase von dem elektronischen Steuergerät 14 eingeleitet, so wird das Regenerationsventil 32 in seine nicht dargestellte Schaltstellung überführt und gleichzeitig oder in kurzem zeitlichen Abstand auch das Ablasssteuerventil 30 in seinen nicht dargestellten Schaltzustand überführt. Durch das Überführen des Ablasssteuerventils 30 in seinen nicht dargestellten Schaltzustand wird ein Kompressorsteuereingang 28 belüftet, so dass ein nicht dargestellter Kompressor in seine Leerlaufphase überführt wird, und das Ablassventil 42 in seinen nicht dargestellten Schaltzustand gebracht. Hierdurch kann die zur Regeneration benötigte Luft aus den beiden Betriebsbremskreisen 64, 68 über das Wechselventil 60 und das Ablassventil 32 durch das Rückschlagventil 34 und die Drossel 36, das heißt unter Umgehung des Rückschlagventils 38, durch den Lufttrockner 40 und das Ablassventil 42 zu einer Entlüftung 44 strömen, an der sie die Druckluftaufbereitungsanlage 10 verlässt. Dabei nimmt die Regenerationsluft in dem Lufttrockner 40 gespeicherte Öl- und Schmutzpartikel sowie Feuchtigkeit auf, und entfernt sie aus dem System. Nach Beendigung der Regenerationsphase werden das Ablasssteuerventil 30 und das Regenerationsventil 32 wieder in ihre dargestellten Schaltzustände überführt. Hierdurch wird der Kompressorsteuerausgang 28 und der pneumatische Steuereingang des Ablassventils 42 mit einer Entlüftung 46 gekoppelt und das Ablassventil 42 wieder in seinen dargestellten Schaltzustand überführt sowie der nicht dargestellte Kompressor wieder in eine Förderphase geschaltet.

Das ebenfalls von dem elektronischen Steuergerät 14 gesteuerte Feststellbremsmodul 12 umfasst neben den direkt durch das elektronische Steuergerät 14 ansteuerbaren Magnetventilen 16, 18 und 20 ein Relaisventil 22 mit angeschlossener explizit als Schalldämpfer dargestellter Entlüftung 48, das Federspeicherzylinder 92, 94 be- und entlüftet. Die Druckverhältnisse in den Federspeicherbremszylindern 92, 94 sind dabei über den Drucksensor 56 von dem elektronischen Steuergerät 14 detektierbar. Das Relaisventil 22 wird pneumatisch über ein Wechselventil 112 angesteuert, wobei das Wechselventil 112 über eine Steuerdruckleitung 98 und einen Ausgang 110 eines Zweidruckventils 104 druckbeaufschlagbar ist. Die Steuerdruckleitung 98 kann beispielsweise bei einer Betriebsbremsung belüftet werden, um ein Schließen der Betriebsbremse bei geschlossener Feststellbremse zu vermeiden, da dies zu einer Überbelastung der Feststellbremszylinder 92, 94 führen könnte. Die Magnetventile 16, 18, 20 und 114 generieren zusammen mit dem Zweidruckventil 104 mit seinem ersten Eingang 106 und seinem zweiten Eingang 108 in an sich bekannter Weise einen Steuerdruck für das Relaisventil 22 und zwei verschiedene Anhängersteuerdrücke auf Anhängersteuerleitungen 96 und 100.

Das Feststellbremsmodul 12 verfügt nicht über eine eigens zur Druckbegrenzung dienendes Sicherheitsventil, das geeignet ist, selbsttätig Druck aus dem Feststellbremsmodul 12 abzulassen, wenn ein zulässiges Druckniveau überschritten wird. Ist beispielsweise der Druckbegrenzer 74 defekt, so kann das Druckniveau in dem Feststellbremsmodul 12 bis auf das in dem ersten Betriebsbremskreis 64 beziehungsweise dem zweiten Betriebsbremskreis 68 herrschende Druckniveau ansteigen. Da insbesondere die Federspeicherbremszylinder 92, 94 sowie ein Anhängerkreis hierfür nicht ausgelegt sind, ist eine schnelle Reduzierung des Druckniveaus in dem Feststellbremsmodul 12 notwendig. Zunächst detektiert das elektronische Steuergerät 14 das unerlaubte Ansteigen des Druckniveaus innerhalb des Feststellbremsmoduls 12. Dies kann beispielsweise durch Druckmessungen der Drucksensoren 54, 56 oder 58 erfolgen, wobei die Drucksensoren 56 und 58 auch innerhalb des Feststellbremsmoduls 12 angeordnet sein können. Eine Druckmessung direkt an den Feststellbremszylindern 92, 94 ist ebenfalls möglich. Alternativ kann auch eine indirekte Abschätzung über Sensoren in einem Anhängersteuermodul oder auf eine andere dem Fachmann bekannte Weise erfolgen. Wesentlich ist lediglich, das im Feststellbremsmodul 12 herrschende Druckniveau zu bestimmen. Nachdem die Überschreitung des zulässigen Druckniveaus innerhalb des Feststellbremsmoduls 12 festgestellt wurde, wird eine eventuell stattfindende Druckluftförderung durch die Druckluftaufbereitungsanlage 10 unterbrochen, um ein weiteres Ansteigen des Druckniveaus zu verhindern. Das gleichzeitige Einleiten einer Regenerationsphase kann von Vorteil sein, da hierdurch das Druckniveau in dem ersten Betriebsbremskreis 64 und dem zweiten Betriebsbremskreis 68 nachhaltig reduziert wird, ist jedoch optional. Das elektronische Steuergerät 14 setzt einen gegenüber dem Normalbetrieb reduzierten Abschaltdruck der Druckluftaufbereitungsanlage 10 fest, um eine Drucküberschreitung in dem Feststellbremsmodul 12 nachhaltig vermeiden zu können. Die Höhe des reduzierten Abschaltdrucks kann sich vorteilhafterweise durch die zulässige Druckbelastung des Feststellbremsmoduls ergeben, also dem normalen Maximaldruck innerhalb des Feststellbremsmoduls entsprechen. Da das Druckniveau in dem Feststellbremsmodul 12 aufgrund des Rückschlagventils 84 beziehungsweise des Überströmventils 78 ohne Druckluftverbrauch nicht absinken kann, wird das in dem Feststellbremsmodul vorhandene Druckniveau durch wiederholtes Ansteuern des Relaisventils 22 abgesenkt. Dabei wird das Druckniveau in den Federspeicherbremszylindern 92, 94 zyklisch erhöht und wieder abgesenkt, so dass Druckmittel über die Entlüftung 48 entweichen kann. Das Druckniveau in den Federspeicherbremszylindern 92, 94 wird dabei zwischen den momentan in dem Feststellbremsmodul 12 herrschenden Druck und einem Minimaldruck von ca. 6 bar variiert, wobei der minimale Druck so gewählt ist, dass die Federspeicherbremszylinder 92, 94 nicht schließen. Dies ist möglich, da das Schließen der Federspeicherbremszylinder 92, 94 üblicherweise bei einem Druckniveau von etwa 5,5 bar erfolgt. Durch das Ablassen von Druckmittel wird auch das Druckniveau in den beiden Betriebsbremskreisen 64, 68 abgesenkt. Das Relaisventil 22 übernimmt also durch die intelligente Ansteuerung die Funktion des Sicherheitsventils in dem Feststellbremsmodul.

Nachdem sich das Druckniveau in dem Feststellbremsmodul 12 wieder normalisiert hat, kann die Druckluftaufbereitungsanlage 10 mit dem reduzierten Abschaltdruck seine normale Funktionstätigkeit wieder aufnehmen. Es kann also wieder Druckluft gefördert werden, jedoch nur noch bis zu dem reduzierten Abschaltdruck. Das Fahrzeug kann in diesem Zustand ohne Beschränkung im Straßenverkehr weiterbewegt werden. Falls das elektronische Steuergerät 14 erkennt, dass der für den unerwünschten Druckanstieg innerhalb des Feststellbremsmoduls 12 verantwortliche Fehler reversibel ist, ist es denkbar, dass aus Gründen der Energieeffizienz der reduzierte Abschaltdruck erneut durch den zuvor geltenden höheren Abschaltdruck ersetzt wird.

### Bezugszeichenliste

- 10: Druckluftaufbereitungsanlage
- 12: Feststellbremsmodul
- 14: elektronisches Steuergerät
- 16: Magnetventil
- 18: Magnetventil
- 20: Magnetventil
- 22: Relaisventil
- 24: Drucklufteingang
- 26: Fremdbelüftungseingang
- 28: Kompressorsteuerausgang
- 30: Ablasssteuerventil
- 32: Regenerationsventil
- 34: Rückschlagventil
- 36: Drossel
- 38: Rückschlagventil
- 40: Lufttrockner
- 42: Ablassventil
- 44: Entlüftung
- 46: Entlüftung
- 48: Entlüftung
- 50: Drucksensor
- 52: Drucksensor
- 54: Drucksensor
- 56: Drucksensor
- 58: Drucksensor
- 60: Wechselventil
- 62: Überströmventil
- 64: erster Betriebsbremskreis
- 66: Überströmventil
- 68: zweiter Betriebsbremskreis
- 70: Überströmventil
- 72: Luftfederung
- 74: Druckbegrenzer
- 76: Druckbegrenzer
- 78: Überströmventil
- 80: Überströmventil
- 82: Überströmventil
- 84: Rückschlagventil
- 86: Anhängerversorgungskreis
- 88: Getriebe
- 90: Zusatzverbraucher
- 92: Federspeicherbremszylinder
- 94: weiterer Federspeicherbremszylinder
- 96: Anhängersteuerleitung
- 98: Steuerdruckleitung
- 100: weitere Anhängersteuerleitung
- 102: Förderleitung
- 104: Zweidruckventil
- 106: erster Eingang
- 108: zweiter Eingang
- 110: Ausgang
- 112: Wechselventil
- 114: Magnetventil

## Patentansprüche

1. Verfahren zum Betreiben eines zumindest teilweise in eine Druckluftaufbereitungsanlage (10) integrierten Feststellbremsmoduls (12) im Defektfall, mit
- einem elektronischen Steuergerät (14),
- mehreren Magnetventilen (16, 18, 20) zum Bereitstellen eines Steuerdrucks zur Betätigung der Feststellbremse und
- einem den Steuerdruck empfangenden Relaisventil (22) zum Be- und Entlüften von zumindest einem Federspeicherbremszylinder (92, 94),
**dadurch gekennzeichnet,**
- **dass** ein gegenüber einem normalen Druck erhöhter Druck in dem Feststellbremsmodul (12) festgestellt wird,
- **dass** eine laufende Druckluftförderung abgebrochen wird,
- **dass** ein reduzierter Abschaltdruck der Druckluftaufbereitungsanlage (10) festgesetzt wird und
- **dass** das Druckniveau in dem Feststellbremsmodul (12) durch wiederholtes Ansteuern des Relaisventils (22) auf den reduzierten Abschaltdruck gesenkt wird.

2. Verfahren nach Anspruch 1, **dadurch gekennzeichnet, dass** nach dem Abbrechen der Druckluftförderung und vor dem Festsetzen eines niedrigeren Abschaltdruckes eine Regenerationsphase bis zum ursprünglichen Einschaltdruck beziehungsweise bis zum Ende der ursprünglichen Schaltspanne eingeleitet wird, um überschüssiges Druckmittel schneller ablassen zu können.

3. Verfahren nach Anspruch 1 oder 2, **dadurch gekennzeichnet, dass** bei dem Druckabbau durch wiederholtes Ansteuern des Relaisventils (22) eine zyklische Druckänderung in dem zumindest einen von dem Relaisventil (22) angesteuerten Federspeicherbremszylinder induziert wird, wobei der minimale Druck einen Öffnungsdruck des Federspeicherbremszylinders nicht unterschreitet.

4. Verfahren nach einem der vorhergehenden Ansprüche, **dadurch gekennzeichnet, dass** nach dem Absenken des Druckniveaus auf den reduzierten Abschaltdruck der ursprünglich höhere Abschaltdruck wieder festgesetzt wird, wenn im Feststellbremsmodul (12) ein dauerhaft normales Druckniveau festgestellt wird.

5. Verfahren nach einem der Ansprüche 1 bis 3, **dadurch gekennzeichnet, dass** die Druckluftaufbereitungsanlage (10) nach dem Absenken des Druckniveaus auf den reduzierten Abschaltdruck mit dem reduzierten Abschaltdruck ohne Einschränkung der Funktionalität weiterbetrieben wird.

6. Feststellbremsmodul (12), das zumindest teilweise in eine Druckluftaufbereitungsanlage (10) integriert ist, mit
- einem elektronischen Steuergerät (14),
- mehreren Magnetventilen (16, 18, 20) zum Bereitstellen eines Steuerdrucks zur Betätigung der Feststellbremse und
- einem den Steuerdruck empfangenden Relaisventil (22) zum Be- und Entlüften von zumindest einem Federspeicherbremszylinder (92, 94),
**dadurch gekennzeichnet, dass** das elektronische Steuergerät (14) geeignet ist,
- einen gegenüber einem normalen Druck erhöhten Druck in dem Feststellbremsmodul (12) festzustellen,
- eine eventuell laufende Druckluftförderung abzubrechen,
- einen reduzierten Abschaltdruck der Druckluftaufbereitungsanlage (10) festzusetzen und
- das Druckniveau in dem Feststellbremsmodul (12) auf den reduzierten Abschaltdruck durch wiederholtes Ansteuern des Relaisventils zu senken.

7. Feststellbremsmodul (12) nach Anspruch 6, **dadurch gekennzeichnet, dass** das elektronische Steuergerät (14) geeignet ist, nach dem Abbrechen der Druckluftförderung und vor dem Festsetzen eines niedrigeren Abschaltdruckes eine Regenerationsphase bis zum ursprünglichen Einschaltdruck beziehungsweise bis zum Ende der ursprünglichen Schaltspanne einzuleiten, um überschüssiges Druckmittel schneller ablassen zu können.

8. Feststellbremsmodul (12) nach Anspruch 6 oder 7, **dadurch gekennzeichnet, dass** das elektronische Steuergerät (14) geeignet ist, bei dem Druckabbau durch wiederholtes Ansteuern des Relaisventils (22) eine zyklische Druckänderung in dem zumindest einen von dem Relaisventil (22) angesteuerten Federspeicherbremszylinder zu induzieren, wobei der minimale Druck einen Öffnungsdruck des Federspeicherbremszylinders nicht unterschreitet.

9. Feststellbremsmodul (12) nach einem der Ansprüche 6 bis 8, **dadurch gekennzeichnet, dass** das elektronische Steuergerät (14) geeignet ist, nach dem Absenken des Druckniveaus auf den reduzierten Abschaltdruck den ursprünglich höheren Abschaltdruck wieder festzusetzen.

10. Feststellbremsmodul (12) nach einem der Ansprüche 6 bis 8, **dadurch gekennzeichnet, dass** das elektronische Steuergerät (14) geeignet ist, die Druckluftaufbereitungsanlage (10) nach dem Absenken des Druckniveaus auf den reduzierten Abschaltdruck mit dem reduzierten Abschaltdruck ohne Einschränkung der Funktionalität weiterzubetreiben.

## Claims

1. A method for operating a parking brake module (12) that is at least partially integrated into a compressed air processing unit (10) in the event of defects, comprising
- an electronic control unit (14),
- a plurality of solenoid valves (16, 18, 20) for supplying a control pressure for actuation of the parking brake and
- a relay valve (22) receiving the control pressure for the ventilation and venting of at least one spring brake cylinder (92, 94),
**characterized in that**
- a pressure in the parking brake module (12) in excess of a normal pressure is detected,
- an ongoing compressed air delivery is interrupted,
- a reduced cut-out pressure of the compressed air processing unit (10) is set and
- the pressure level in the parking brake module (12) is reduced to the reduced cut-out pressure through repeated activation of the relay valve (22).

2. The method as claimed in claim 1, **characterized in that** after interruption of the compressed air delivery and before setting a lower cut-out pressure, a regeneration phase is initiated until the original cut-in pressure is reached or until the original switching period has elapsed, so as to be able to discharge excess fluid more rapidly.

3. The method as claimed in claim 1 or 2, **characterized in that** in the event of the pressure reduction through repeated activation of the relay valve (22), a cyclical pressure variation is induced in at least the one spring brake cylinder activated by the relay valve (22), the minimum pressure being not less than an opening pressure of the spring brake cylinder.

4. The method as claimed in one of the preceding claims, **characterized in that** after reduction of the pressure level to the reduced cut-out pressure, the originally higher cut-out pressure is reinstated, if a consistently normal pressure level is detected in the parking brake module (12).

5. The method as claimed in one of claims 1 to 3, **characterized in that** after reduction of the pressure level to the reduced cut-out pressure, the compressed air processing unit (10) continues to be operated at the reduced cut-out pressure without any restriction of the functionality.

6. A parking brake module (12), which is at least partially integrated into a compressed air processing unit (10), comprising
- an electronic control unit (14),
- a plurality of solenoid valves (16, 18, 20) for supplying a control pressure for actuation of the parking brake and
- a relay valve (22) receiving the control pressure for the ventilation and venting of at least one spring brake cylinder (92, 94),
**characterized in that** the electronic control unit (14) is suited to
- detecting a pressure in the parking brake module (12) in excess of a normal pressure,
- interrupting any ongoing compressed air delivery,
- setting a reduced cut-out pressure of the compressed air processing unit (10) and
- reducing the pressure level in the parking brake module (12) to the reduced cut-out pressure through repeated activation of the relay valve.

7. The parking brake module (12) as claimed in claim 6, **characterized in that** the electronic control unit (14) is suited, after interruption of the compressed air delivery and before setting a lower cut-out pressure, to initiating a regeneration phase until the original cut-in pressure is reached or until the original switching period has elapsed, so as to be able to discharge excess fluid more rapidly.

8. The parking brake module (12) as claimed in claim 6 or 7, **characterized in that** the electronic control unit (14) is suited, in the event of the pressure reduction through repeated activation of the relay valve (22), to inducing a cyclical pressure variation in at least the one spring brake cylinder activated by the relay valve (22), the minimum pressure being not less than an opening pressure of the spring brake cylinder.

9. The parking brake module (12) as claimed in one of claims 6 to 8, **characterized in that** the electronic control unit (14) is suited, after reduction of the pressure level to the reduced cut-out pressure, to reinstating the originally higher cut-out pressure.

10. The parking brake module (12) as claimed in one of claims 6 to 8, **characterized in that** the electronic control unit (14) is suited, after reduction of the pressure level to the reduced cut-out pressure, to continued operation of the compressed air processing unit (10) at the reduced cut-out pressure without any restriction of the functionality.

## Revendications

1. Procédé pour faire fonctionner un module (12) de frein de stationnement intégré dans un système de traitement d'air comprimé en cas de défaillance, comprenant
- un appareil (14) électronique de commande,
- plusieurs électrovannes (16, 18, 20), pour disposer d'une pression de commande pour l'actionnement du frein de stationnement et
- une vanne (22) relais, qui reçoit la pression de commande et qui est destinée à remplir et à vider d'air au moins un cylindre (92, 94) de frein à ressort accumulateur,
**caractérisé**
- **en ce que** l'on fixe, dans le module (12) de frein de stationnement, une pression plus élevée qu'une pression normale,
- **en ce que** l'on interrompt un transport courant d'air comprimé,
- **en ce que** l'on fixe une pression réduite d'interruption du système (10) du traitement d'air comprimé et
- **en ce que** l'on abaisse le niveau de pression dans le module (12) de frein de stationnement à la pression réduite d'interruption, par une commande répétée de la vanne (22) relais.

2. Procédé suivant la revendication 1, caractérisé en que, après l'interruption du transport d'air comprimé et avant la fixation d'une pression plus basse d'interruption, on fait débuter une phase de régénération jusqu'à la pression de déclenchement d'origine ou jusqu'à la fin de l'écart de réglage d'origine afin de pouvoir évacuer plus rapidement du fluide sous pression en excès.

3. Procédé suivant la revendication 1 ou 2, **caractérisé en ce que**, lors de la détente de la pression par commande répétée de la vanne (22) relais, on induit une variation de pression cyclique dans le cylindre de frein à ressort accumulateur commandé par la vanne (22) relais, la pression minimum ne devenant pas inférieure à une pression d'ouverture du cylindre de frein à ressort accumulateur.

4. Procédé suivant l'une des revendications précédentes, caractérisé en que, après l'abaissement du niveau de pression à la pression réduite d'interruption, on remet la pression d'interruption plus haute à l'origine, si l'on constate un niveau de pression normale permanent dans le module (12) de frein de stationnement.

5. Procédé suivant l'une des revendications 1 à 3, **caractérisé en ce que** l'on continue à faire fonctionner le système (10) de traitement d'air comprimé, après l'abaissement du niveau de pression à la pression réduite d'interruption, à la pression réduite d'interruption sans limitation de la fonctionnalité.

6. Module (12) de frein de stationnement qui est intégré, au moins en partie, dans un système (10) de traitement d'air comprimé, comprenant
- un appareil (14) électronique de commande,
- plusieurs électrovannes (16, 18, 20), pour disposer d'une pression de commande pour l'actionnement du frein de stationnement et
- une vanne (22) relais, qui reçoit la pression de commande et qui est destinée à remplir et à vider d'air au moins un cylindre (92, 94) de frein à ressort accumulateur,
**caractérisé en ce que** l'appareil (14) électronique de commande est propre
- à fixer, dans le module (12) de frein de stationnement, une pression plus élevée qu'une pression normale,
- à interrompre un transport d'air comprimé ayant cours éventuellement,
- à fixer une pression réduite d'interruption du système (10) du traitement d'air comprimé et
- à abaisser le niveau de pression, dans le module (12) de frein de stationnement à la pression réduite d'interruption, par une commande répétée de la vanne relais.

7. Module (12) de frein de stationnement suivant la revendication 6, **caractérisé en ce que** l'appareil (14) électronique de commande est propre à faire débuter, après l'interruption du transport d'air comprimé et avant la fixation d'une pression plus basse d'interruption, une phase de régénération jusqu'à la pression d'enclenchement d'origine ou jusqu'à la fin de l'écart de réglage d'origine, afin de pouvoir évacuer plus rapidement du fluide sous pression en excès.

8. Module (12) de frein de stationnement suivant la revendication 6 ou 7, **caractérisé en ce que** l'appareil (14) électronique de commande est propre à, lors de la détente de pression, induire, par une commande répétée de la vanne (22) relais, une variation de pression cyclique dans le cylindre de frein à ressort accumulateur commandé par la vanne (22) relais, la pression minimum ne devenant pas inférieure à une pression d'ouverture du cylindre de frein à ressort accumulateur.

9. Module (12) de frein de stationnement suivant l'une des revendications 6 à 8, **caractérisé en ce que** l'appareil (14) électronique de commande est propre à remettre, après l'abaissement du niveau de pression à la pression réduite d'interruption, la pression d'interruption plus élevée à l'origine.

10. Module (12) de frein de stationnement suivant l'une des revendications 6 à 8, **caractérisé en ce que** l'appareil (14) électronique de commande est propre à continuer à faire fonctionner le système (10) de traitement d'air comprimé, après l'abaissement du niveau de pression à la pression réduite d'interruption, à la pression réduite d'interruption sans limitation de la fonctionnalité.
